# EUROPEAN PATENT SPECIFICATION

(11) **EP 0 358 490 B1**
(45) Date of publication and mention of the grant of the patent: **19.05.1993**
(21) Application number: 89309037.3
(22) Date of filing: 06.09.1989
(51) Int. Cl.: B60C 15/02, B60C 15/024

(54) **Tyre and rim assembly and tyre for use thereon**
Luftreifen-Felgen-Einheit und Luftreifen dafür
Ensemble pneumatique-jante et pneumatique

(30) Priority: 06.09.1988 JP 223942/88
(43) Date of publication of application: 14.03.1990
(73) Proprietor: SUMITOMO RUBBER INDUSTRIES LIMITED, Chuo-ku Kobe-shi Hyogo 651 (JP)
(72) Inventor: Wada, Yasuo, Nishinomiya-shi Hyogo-ken (JP); Ito, Hiroshi, Nishinomiya-shi Hyogo-ken (JP)
(74) Representative: Stewart, Charles Geoffrey

(56) References cited:
- EP-A- 0 253 568
- EP-A- 0 273 056
- WO-A-87/06889
- DE-B- 1 005 862
- GB-A- 1 584 554

## Description

The present invention relates to a tyre and rim assembly capable of running safely without tyre bead dislodgement when the internal pressure of the tyre is lowered or the vehicle makes a sharp turn at high speed, and a tyre for the assembly also able to be mounted on standard rims.

In conventional tyre and rim assemblies, the beads of the tyre are retained on the bead seats of the rim by means of the friction force therebetween generated by the inflation pressure of the tyre.

Accordingly, when the inflation pressure of the tyre is lowered, the retaining force is also reduced, and if a vehicle cornering operation is made when the internal pressure is greatly lowered for example by a puncture, then the beads are pushed from their seats on the rim by the lateral force. Particularly when the rim is provided with a well for tyre fitting, the beads then fall into the well and as a result, the tyre may well dismount from the rim, and a serious accident can be caused.

The lateral force caused by cornering moves the tread of the tyre in the lateral direction, and the force of this shift is transferred to the beads through the sidewalls. The bead is subjected to a force F in the axial direction and also a moment M around the bead core, as shown in Fig.5. This figure shows the operation of the tyre and rim assembly according to the present invention but the principle is the same as for the standard tyre and rim.

When such a lateral force is applied and the internal pressure of the tyre is low, the moment lifts the heel of the bead and reduces the force on the seat and thus the frictional force with the rim. The bead is thus able to move axially inwardly on the tapered bead rim base RB, which thus lowers the hoop tension in the bead core, and as a result, the retaining force of the bead is much further decreased, and the bead falls into the fitting well WE.

To solve the above mentioned problems, there have been the following proposals:-
the use of a rim without a well:
the use of a rim provided at the axially inner edge of the bead seat or rim base with a hump on which the toe of the bead impinges;
the combined use of a rim provided with a hump adjacent to the bead seat or rim base and a tyre provided with an annular groove to engage with the hump (Japanese Patent Application KOKAI No. 49-13802) and
the combined use of a rim provided at the axially inner edge of the bead seat or rim base with an annular groove and a tyre provided at the bead toe with a protuberance to engage the annular groove (Japanese Patent Publication TOKKTO KOHO No. 57-15007).

Note however, that the rim disclosed in Japanese Patent Publication TOKKYO KOHO No. 57-15007, is formed in a special shape so that it is not able to be used for conventional standard tyres.

Further, in International Publication No. WO87/06889, there have been proposed a tyre and rim assembly corresponding to the preamble of claim 1, and a rim capable of keeping the bead safe at low internal pressure in which conventional standard tyres can be used in addition to special tyres designed therefor.

This assembly has superior effects as a bead retaining mechanism and the rim can be used safely for a standard tyre having a conventional bead construction. The special tyre of the invention has the possibility that the beads may be damaged when it is mounted on or demounted from the rim, and more effort is required for the mounting and demounting operation in comparison with a conventional tyre and rim assembly.

Moreover, if the special tyre is mounted on a conventional standard rim an improper fit results which may allow bead unseating due to the bead toe having a large volume.

None of the above conventional constrictions have provided a satisfactory solution to the problems.

It is therefore an object of the present invention to provide a tyre and rim assembly, in which the tyre beads are prevented from being dislodged from the rim by the lateral forces generated not only by a sudden decrease in the internal pressure such as a puncture but also by a hard cornering operation, and for which the mounting and demounting operations are easy and also it is another object of the present invention to provide a tyre capable of being used in the assembly as well as being mounted and used on a conventional standard rim.

According to the present invention a tyre and rim assembly comprises a rim having a pair of bead seats ,a rim flange disposed axially outwardly of each bead seat, a hump formed axially inwardly of each bead seat and an annular groove formed axially inwardly of each hump, wherein the tyre comprises a pair of beads each with a bead base and at least one of the beads has a radially inwardly projecting toe disposed axially inside the bead base and circumferentially extending hump groove disposed between the toe and the bead base characterised in that when the tyre is inflated to its regular internal presure, the hump groove and the tip of the toe are spaced apart from the hump and the annular groove and the distance L in the radial direction between the radially outermost points of the hump and the radially outermost point of the hump groove is not less than 0.5mm and not more than 2.0mm. A second aspect of the invention provides a tyre of the dimensions required for the above tyre and wheel assembly.

The result is that when the tyre is inflated to its regular internal pressure, the hump groove of the tyre bead does not contact the wheel rim. However, if the internal pressure of the tyre is lowered such as a by puncture, and then a lateral force is applied to the tyre by cornering, then the resultant moment rotates the bead around the bead core, and as a result the hump groove and the bead toe of the tyre engage with the hump and the annular groove of the wheel rim respectively.

Accordingly, a force resisting the bead unseating force is then generated to prevent the bead from moving into the well, thereby preventing the tyre from being dislocated from the rim.

Further, when the tyre of the present invention, in which the tip of the bead toe is located radially outside the bead base, is mounted or dismounted the mounting and demounting operation is easy in the same way as conventional tyre and rim assemblies as the toe does not contact the rim. Also it is possible to mount the tyre on a conventional standard rim although the bead retention special properties are then lost.

Embodiments of the present invention will be described in detail by way of example only, with reference to the accompanying drawings, in which:
Fig.1. is a sectional view of a tyre and rim assembly according to the present invention
Fig.2. is a sectional view of the bead of the tyre
Fig.3 is a sectional view part of the rim
Fig.4 is a graph showing the relationship between the resistance to bead unseating and the ratio W2/W1 and
Fig.5 is a sectional view showing the mode of operation of the tyre and rim assembly.

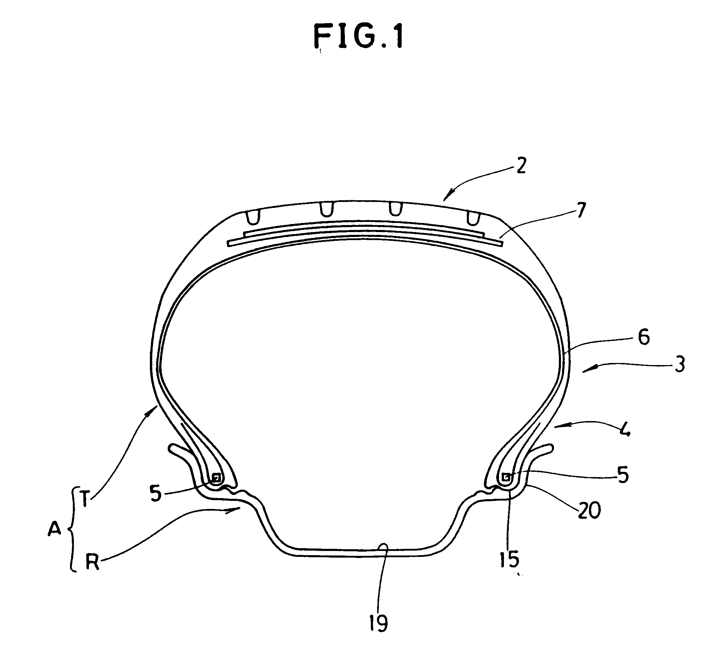

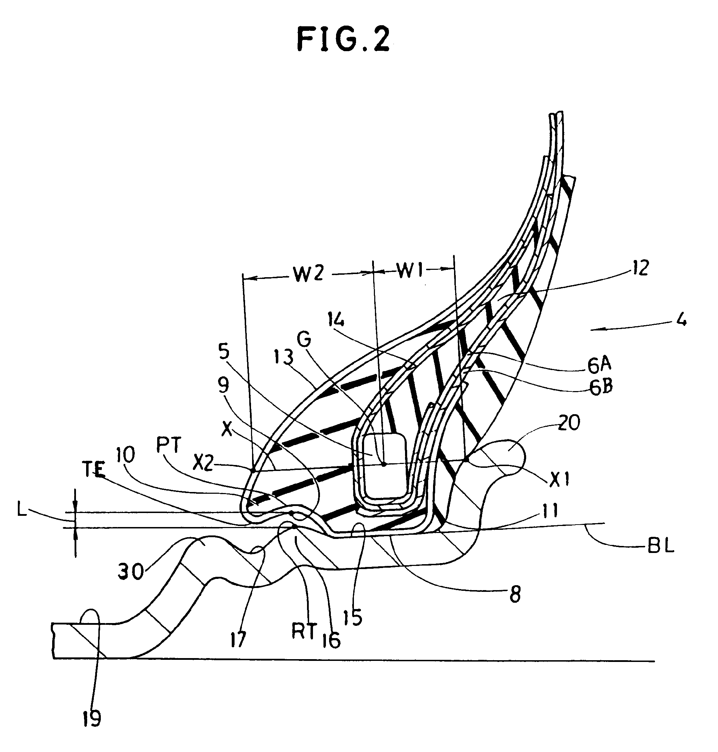

In Fig.1 and Fig.2 the tyre T has a pair of beads 4, a tread 2, and a pair of sidewalls 3. In each bead 4 there is a bead apex 12 and the tyre is reinforced by a carcass 6 extending between the beads through the sidewalls 3 and tread 2, and a breaker or belt 7 disposed radially outside the carcass 6.

The carcass 8 is composed of two inner and outer plies 6A and 6B of radially arranged cords, with the inner carcass ply 6A turned up in each bead around a bead core 5 from the inside to the outside thereof to be secured thereto. The outer carcass ply 6B extends along the outside of the turned up portion of the inner carcass ply 6A and is turned up around the bead core 5 from the outside towards the inside thereof so that the edge is terminated inside the bead core 4 in the bead base region.

For the carcass cords, organic fibre cords such as aliphatic polyamide, rayon, polyester, aromatic polyamide and the like, carbon fibre cords, and metallic fibre cords may be used.

The breaker belt 7 is made of at least two plies of high modulus cords such as aromatic polyamide fibre cords, carbon fibre cords, glass fibre cords, metallic fibre cords and the like, which are arranged at relatively small angles, for example 10 to 30 degrees, with respect to the circumferential direction so that the belt plies cross each other.

The bead apex 12 is made of a relatively hard rubber and is disposed radially outwardly of the bead core 5 between the inner carcass ply turned up portion and the main portion. The bead apex 12 is tapered radially outwardly from the bead core 5, thereby having a substantially triangular sectional shape.

In each bead region, a reinforcing layer 14 of organic fibre or metallic fibre cords is disposed between the carcass 6 and the bead core 5 and apex 12 and folded around the bead core 5 to wrap the bead core 5 and apex 12 therein.

Each of the beads 4 has a bead base 8 positioned radially inside the bead core 5 as shown in Fig.2.

The axially outer edge of the bead base 8 is connected to the radially extending outer surface of the bead which contacts with a rim flange 20 by a rounded bead heel 11.

The shape and dimensions of the tyre from the inner edge of the bead base 8 to a point on the outside of the bead which contacts the outer edge of a rim flange, is formed as a conventional standard tyre of corresponding size, that is, the diameter, width, taper angle, etc. are set conventionally.

At least one bead of the tyre and in this embodiment each bead is provided axially inwards of the inner bead base edge with a circumferentially continuously extending hump groove 9. This is formed immediately axially inside the bead base 8, and has inward of it an obliquely and axially inwardly projecting toe 10.

The radially innermost edge TE of the bead toe 10 is located radially outside a bead base line BL which is the straight line of the bead base 11 as shown in Fig.2.

The toe 10 is made of a relatively hard rubber, for example, having a JIS-A hardness of 70 to 95, and the toe is reinforced by a fibre reinforcing layer 13 disposed along the contour thereof to prevent deformation and damage. The axially inner portion of the layer 13 is extended upwardly almost to the same height as the turned up portion of the carcass ply 6A, and the outer portion extends along the outline of the hump groove 9 and the bead base 8, and is turned radially outwardly at the bead heel 11, and then extends along the outside of the carcass 6.

The distance W2, of a point X2 on the inside of the bead from the centre of gravity G of the bead core 5 and the distance W, of a point X1 on the outside of the bead from the centre of gravity G, are set so that the ratio W2/W1 is not less than 1.50 wherein the points X1 and X2 are defined respectively as the intersections of a line X through the centre of gravity G parallel to the bead base line BL with the outside and the inside surface of the bead 4, respectively.

Even when the ratio W2/W1 is less than 1.50, a strong retaining force more than twice of that in a conventional tyre and rim assembly can be obtained, but the retaining force is increased at 1.50 or higher.

The above mentioned tyre T is mounted on the rim R to form the tyre and rim assembly A as shown in Figure 1.

The rim R has a pair of bead seats or rim bases 15 on which the tyre bead bases are seated, a rim flange 30 disposed axially outwardly of each bead seat 15 to secure the outside of the bead, a hump 16 formed axially inside each bead seat 15, a circumferentially continuous annular groove 17 formed axially inside each hump 16, a protuberance 20 formed axially inside each annular groove 17 and a fitting well 19 between the protruberabces 20 of the two bead seats.

When the assembly A is inflated to its regular internal pressure, the distance L in the radial direction between the top RT of the hump 16 and the radially outermost point PT of the hump groove 9 is in the range not less than 0.5mm and not more than 2.0mm.

By designing in this way, as shown in Fig.5, when the bending moment M due to the lateral force from the tyre bead is applied while the internal pressure of the tyre is lowered, the hump groove 9 and the bead toe 10 of the tyre T engage with the hump 16 and the annular groove 17 of the rim R, thereby preventing the tyre from being dislodged from the rim.

When the distance L is more than 2.0mm, the engagement becomes insufficient. On the other hand, when it is less than 0.5mm, the mounting and demounting operation becomes more difficult.

Therefore, the distance L should be set in the above range.

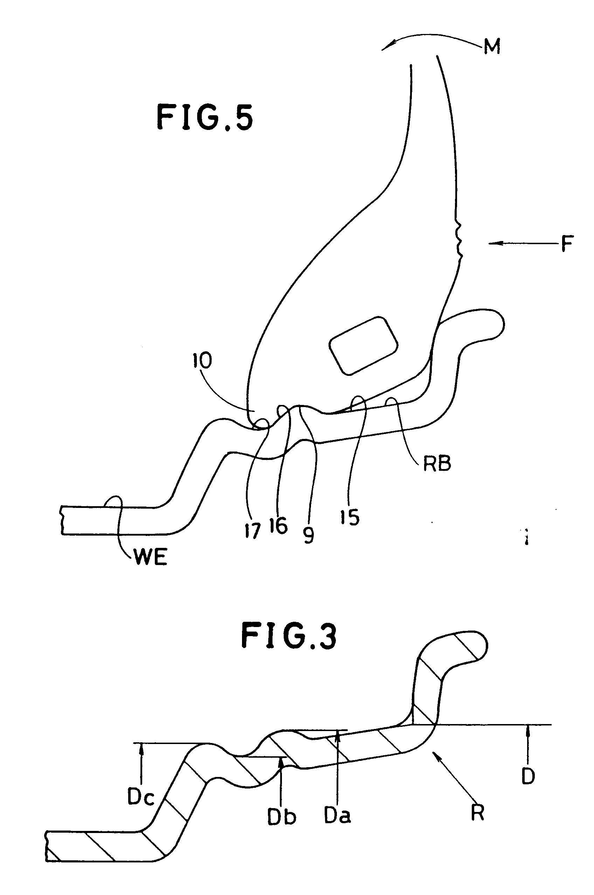

To show the effect of the invention test tyres of size 215.85VR15 were made according to the construction shown in Fig.1 and Fig.2 and specifications given in Table 1, and the tyres were tested for bead unseating. A wheel rim of size 6.5X15 was used in the tests and it had the shape shown in Fig.3 and Table 1. In Table 1, D denotes the rim diameter, Da denotes the diameter at the apex of the hump, Db denotes the diameter at the bottom of the annular groove, and Dc denotes the diameter at the apex of the inner protuberance, as shown in Fig. 3.

The bead unseating tests were made on an indoor bench tester. each test tyre was mounted on the above mentioned rim after assembly of the beads into the well by increasing the inner air pressure to the regular internal pressure. Then the internal pressure was decreased to zero. In such a state of zero pressure the test comprised applying lateral force to the tread and increasing the force. The lateral force when the bead fell into the well was measured.

In the test, examples 1-3 and reference 1 showed higher lateral forces, that is, higher bead retaining forces by a factor of two to three times that of reference 2.

As for the mounting and demounting operations, examples 1 to 3 were in the same level as conventional tyre and rim assemblies with no special retaining mechanism.

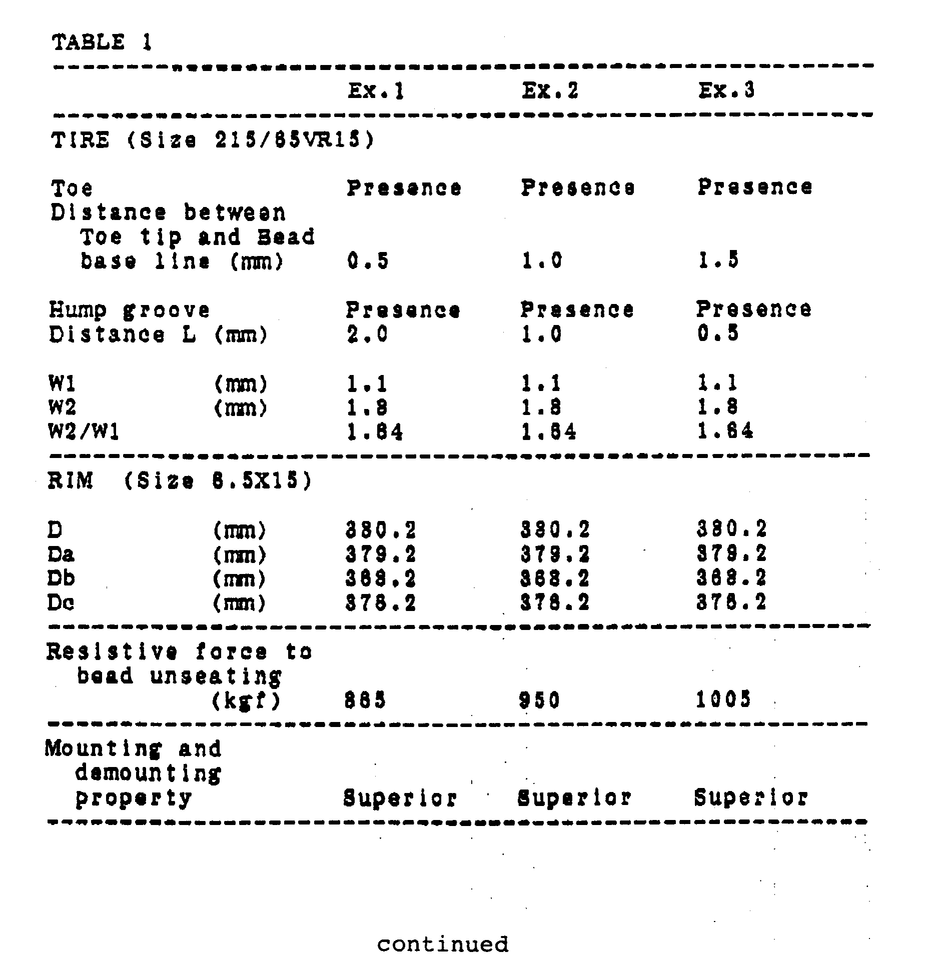

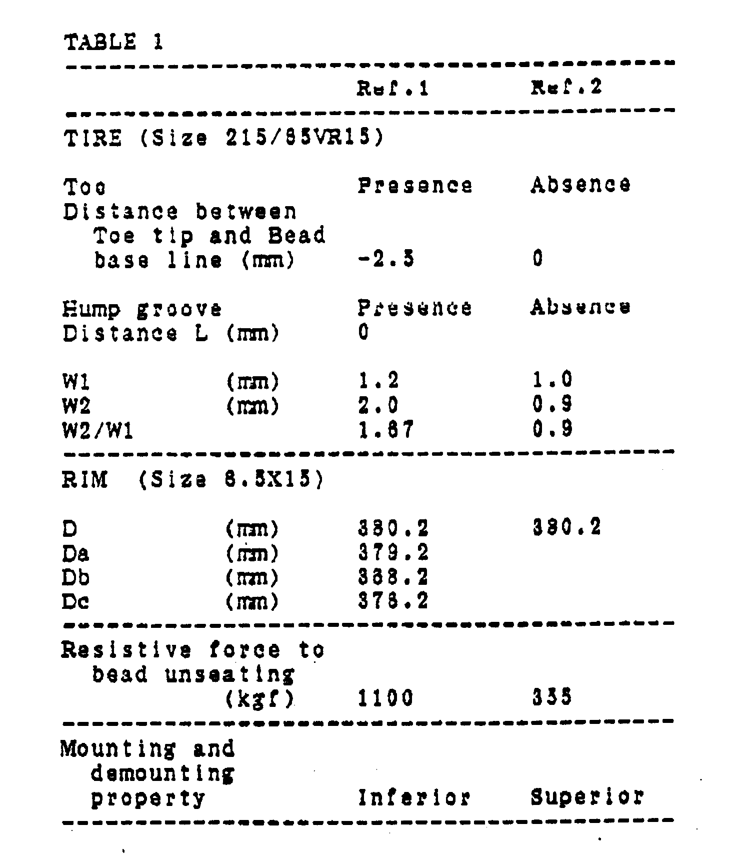

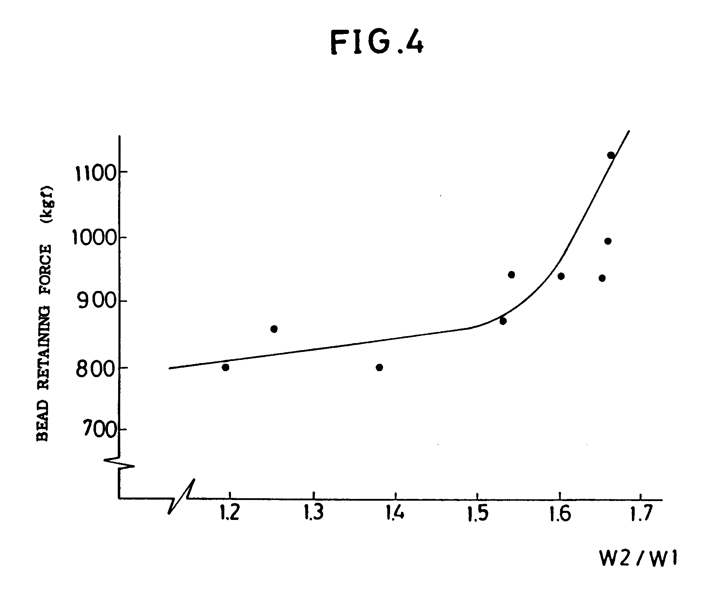

Fig.4 shows the relationship between the W2/W1 ratio and the bead retaining force, wherein the W2/W1 ratio was varied while keeping the total length W1+W2 constant, and the other specifications were the same as Example 2.

This figure shows that the bead retaining force, that is the resistance to bead dislocation from the rim, increases sharply when the ratio W2/W1 is 1.5 or more.

In the tyre and rim assembly according to the present invention, even if the tyre is subject to the lateral force when making a sharp turn at high speed under such a condition that the internal pressure is suddenly lowered, the bead is prevented from being dislocated from the wheel rim, thereby enabling a safe stop of the vehicle. In addition, the assembly can be produced by the existing method, and the mounting and demounting operation is as easy as conventional standard assemblies. The tyre of the present invention can be mounted on a conventional standard rim aside from being used in the above assembly.

## Claims

1. A tyre and rim assembly comprising a rim having a pair of bead seats (15), a rim flange (20) disposed axially outwardly of each bead seat (15), a hump (16) formed axially inwardly of each bead seat (15) and an annular groove (17) formed axially inwardly of each hump (16), wherein the tyre comprises a pair of beads (4) each with a bead base (8) and at least one of the beads (4) has a radially inwardly projecting toe (10) disposed axially inside the bead base (8) and a circumferentially extending hump groove (9) disposed between the toe (10) and the bead base (8) characterised in that when the tyre is inflated to its regular internal pressure, the hump groove (9) and the tip of the toe (10) are spaced apart from the hump (16) and the annular groove (17), and the distance (L) in the radial direction between the radially outermost point (RT) of the hump (16) and the radially outermost point (PT) of the hump groove (9) is not less than 0.5mm and not more than 2.0mm.

2. A tyre comprising a pair of beads (4) each with a bead base (8) and at least one of the beads (4) having a radially inwardly projecting toe (10) disposed axially inside the bead base (8) and a circumferentially extending hump groove (9) disposed between the toe (10) and the bead base (8) such that when mounted on the rim of the assembly of claim 1 and inflated to its regular internal pressure, the distance (L) in the radial direction between the radially outermost point (RT) of the hump (16) and the radially outermost point (PT) of the hump groove (9) is not less than 0.5 mm and not more than 2.0 mm, characterised in that the radially innermost edge TE of the toe (10) is located radially outward of a tyre bead base line BL passing through said bead base (8).

3. A tyre according to claim 2 characterised in that the distance W2, of a point X2 on the inside of the bead on the centre of gravity G of the bead core (5), and the distance W1, of a point X1 on the outside of the bead from the centre of gravity G, are set so that the ratio W2 over W1 is not less than 1.50 wherein the points X1 and X2 are defined respectively as the intersections of a line X through the centre of gravity G parallel to the bead base line BL with the outside and inside surfaces of the bead (4) respectively.

## Patentansprüche

1. Reifen/Felgen-Anordnung, welche umfaßt eine Felge mit zwei Wulstsitzen (15), einem Felgenhorn (20), das axial außerhalb von jedem Wulstsitz (15) angeordnet ist, einem axial innerhalb jedes Wulstsitzes (15) ausgebildeten Höcker (16) und einer axial innerhalb jeder Höckers (16) ausgebildeten Ringnut (17), wobei der Reifen umfaßt ein Paar Wulste (4), die jeweils mit einem Wulstgrund (8) versehen sind, wobei mindestens ein Wulst (4) eine radial nach innen vorstehende Zehe (10) besitzt, die axial innerhalb des Wulstgrundes (8) angeordnet ist, und eine sich in Umfangsrichtung erstreckende Höckernut (9), die zwischen der Zehe (10) und dem Wulstgrund (8) angeordnet ist, dadurch gekennzeichnet, daß bei auf seinen regulären Innendruck aufgepumpten Reifen die Höckernut (9) und die Spitze der Zehe (10) Abstand von dem Höcker (16) bzw. der Ringnut (17) besitzen und der Abstand (L) in Radialrichtung zwischen der radial äußersten Stelle (RT) des Hökkers (16) und der radial äußersten Stelle (PT) der Höckernut (9) nicht kleiner als 0,5 mm und nicht größer als 2,0 mm ist.

2. Reifen, der umfaßt zwei Wulste (4) jeweils mit einem Wulstgrund (8), bei dem mindestens ein Wulst (4) eine radial nach innen vorstehende Zehe (10) besitzt, die axial innerhalb des Wulstgrundes (8) angeordnet ist, und eine sich in Umfangsrichtung erstreckende Höckernut (9), die zwischen der Zehe (10) und dem Wulstgrund (8) angeordnet ist, so daß, wenn er an der Felge der Anordnung nach Anspruch 1 angebracht und auf den regulären Innendruck aufgepumpt ist, der Abstand (L) in Radialrichtung zwischen der radial äußersten Stelle (RT) des Höckers (16) und der radial äußersten Stelle (PT) der Höckernut (9) nicht kleiner als 0,5 mm und nicht größer als 2,0 mm ist, dadurch gekennzeichnet, daß die radial innerste Kante TE der Zehe (10) radial außerhalb einer Reifenwulst-Grundlinie BL angeordnet ist, die durch den Wulstgrund (8) hindurchgeht.

3. Reifen nach Anspruch 2, dadurch gekennzeichnet, daß der Abstand W2 einer Stellz X2 an der Innenseite des Wulstes von dem Schwerpunkt G des Wulstkerns (5) und der Abstand W1 einer Stelle X1 an der Außenseite des Wulstes von dem Schwerpunkt so festgesetzt sind, daß das Verhältnis W2 zu W1 nicht kleiner als 1,50 ist, wobei die Stellen X1 und X2 jeweils als die Überschneidungen einer zur Wulstgrundlinie BL parallelen Linie X durch den Schwerpunkt G mit der äußeren bzw. der inneren Fläche des Wulstes (4) definiert sind.

## Revendications

1. Ensemble à pneumatique et jante comprenant une jante qui possède deux sièges (15) de talon, une flasque de jante (20) disposé axialement à l'extérieur de chaque siège de talon (15), un ressaut (16) formé axialement à l'intérieur de chaque siège (15) de talon, et une gorge annulaire (17) formée axialement vers l'intérieur de chaque ressaut (16), le pneumatique comprenant deux talons (4) ayant chacun une base (8) de talon, l'un au moins des talons (4) ayant une pointe (10) qui dépasse radialement vers l'intérieur et qui est disposée axialement à l'intérieur de la base de talon (8) et une gorge circonférentielle (9) de ressaut placée entre la pointe (10) et la base (8) de talon, caractérisé en ce que, lorsque le pneumatique est gonflé à la pression interne nominale, la gorge (9) du ressaut et le bout de la pointe (10) sont séparés du ressaut (16) et de la gorge annulaire (17), et la distance (L) mesurée en direction radiale entre le point radialement le plus externe (RT) du ressaut (16) et le point radialement le plus externe (PT) de la gorge (9) du ressaut n'est pas inférieure à 0,5 mm ni supérieure à 2,0 mm.

2. Pneumatique comprenant deux talons (4) ayant chacun une base de talon (8), l'un au moins des talons (4) ayant une pointe (10) qui dépasse radialement vers l'intérieur et qui est disposée axialement vers l'intérieur de la base de talon (8), et une gorge (9) de ressaut, disposée circonférentiellement entre la pointe (10) et la base de talon (8) de manière que, lorsqu'il est monté sur la jante de l'ensemble selon la revendication 1 et gonflé à sa pression interne nominale, la distance (L) mesurée en direction radiale entre le point radialement le plus externe (RT) du ressaut (16) et le point radialement le plus externe (PT) de la gorge (9) du ressaut ne soit pas inférieure à 0,5 mm ni supérieure à 2,0 mm, caractérisé en ce que le bord radialement le plus interne (TE) de la pointe (10) est disposé radialement à l'extérieur de la ligne de base (BL) des talons du pneumatique, passant par la base de talon (8).

3. Pneumatique selon la revendication 2, caractérisé en ce que la distance W2 d'un point X2 placé à l'intérieur du talon au centre de gravité G de la tringle (5), et la distance W1 d'un point X1 se trouvant à l'extérieur du talon au centre de gravité G sont réglées de manière que le rapport W2/W1 ne soit pas inférieur à 1,50, les points X1 et X2 étant définis comme étant respectivement les intersections d'une droite X passant par le centre de gravité G parallèlement à la ligne de base BL du talon avec les surfaces externe et interne du talon (4) respectivement.
